# EUROPEAN PATENT APPLICATION

(11) **EP 3 779 677 A1**
(43) Date of publication of application: **17.02.2021**
(21) Application number: 19774939.3
(22) Date of filing: 05.02.2019
(51) Int. Cl.: G06F 8/65, B60R 16/02, G05D 1/02

(54) **SOFTWARE MANAGEMENT DEVICE**

(30) Priority: 27.03.2018 JP 2018059980
(71) Applicant: Yanmar Power Technology Co., Ltd., Osaka-shi Osaka 530-8311 (JP)
(72) Inventor: MURATA, Sosuke, Osaka-shi, Osaka 530-8311 (JP)
(74) Representative: Poindron, Cyrille
(86) International application number: PCT/JP2019/004094
(87) International publication number: WO 2019/187652

(57) **Abstract**

A software management device manages vehicle-side version information of vehicle-side software installed in a work vehicle and terminal-side version information of terminal-side software installed in a wireless communication terminal. The software management device includes a storage unit that stores the vehicle-side version information and the terminal-side version information; a vehicle-side updating unit that changes, based on the vehicle-side software being updated, the vehicle-side version information stored in the storage unit to vehicle-side version information corresponding to the updated vehicle-side software; a terminal-side updating unit that changes, based on the terminal-side software being downloaded to the wireless communication terminal, the terminal-side version information stored in the storage unit to terminal-side version information corresponding to the downloaded terminal-side software; and an information presentation unit that presents the vehicle-side version information and terminal-side version information stored in the storage unit.

## Description

### TECHNICAL FIELD

The present invention relates to a software management device.

### BACKGROUND ART

The following Patent Literature 1 discloses an autonomous traveling system for causing a work vehicle such as a tractor to autonomously travel in a field. The work vehicle is remotely operated by a remote control device.

### CITATION LIST

### Patent Literature

Patent Literature 1: PCT International Publication No. WO 2015/119263

### DISCLOSURE OF INVENTION

### PROBLEMS TO BE SOLVED BY THE INVENTION

In such an autonomous traveling system, in the remote control device, terminal-side software for causing the work vehicle to autonomously travel is installed, and in the controller (for example, an engine controller, a steering controller, and a vehicle speed controller) included in the work vehicle, vehicle-side software for controlling the work vehicle is installed. It may be necessary to update the terminal-side software and the vehicle-side software in order to fix a problem, or the like.

Since the terminal-side software installed in the remote control device and the vehicle-side software installed in the controller of the work vehicle are updated individually, in some cases, only one of them is updated and the other is not updated. In such a case, the terminal-side software installed in the remote control device and the vehicle-side software installed in the controller of the work vehicle do not match, and the work vehicle may not operate normally.

Accordingly, a main object of the present invention is to provide a software management device capable of appropriately managing terminal-side software installed in a wireless communication terminal and vehicle-side software installed in a controller of a work vehicle.

### MEANS FOR SOLVING THE PROBLEMS

One embodiment of the present invention provides a software management device that manages vehicle-side version information of vehicle-side software installed in a controller mounted on a work vehicle that can travel autonomously while working in a field, and terminal-side version information of terminal-side software installed in a wireless communication terminal that communicates with and operates the work vehicle. The software management device includes a storage unit that stores the vehicle-side version information and the terminal-side version information; a vehicle-side updating unit that changes, based on the vehicle-side software installed in the controller being updated by an external terminal connected to the controller, the vehicle-side version information stored in the storage unit to vehicle-side version information corresponding to the updated vehicle-side software; a terminal-side updating unit that changes, based on the terminal-side software being downloaded to the wireless communication terminal, the terminal-side version information stored in the storage unit to terminal-side version information corresponding to the downloaded terminal-side software; and an information presentation unit that presents the vehicle-side version information and the terminal-side version information that are stored in the storage unit.

According to this configuration, when the vehicle-side software installed in the controller is updated by the external terminal, the vehicle-side version information stored in the storage unit is updated. In addition, when the terminal-side software is downloaded to the wireless communication terminal, the terminal-side version information stored in the storage unit is updated. Therefore, the information presentation unit can present the vehicle-side version information of the vehicle-side software currently installed in the controller and the terminal-side version information of the terminal-side software currently installed in the wireless communication terminal.

Therefore, on the basis of the version information presented by the information presentation unit, a service man can know whether the vehicle-side software currently installed in the controller and the terminal-side software currently installed in the wireless communication terminal match. If they do not match, the service man can update the vehicle-side software with the use of the external terminal, or the service man can prompt the user to update the terminal-side software.

As a result, it is possible to appropriately manage the terminal-side software installed in the wireless communication terminal and the vehicle-side software installed in the controller of the work vehicle.

"Match" means that the vehicle-side software and the terminal-side software have compatibility in such a manner that the work vehicle can normally and autonomously travel.

In one embodiment of the present invention, the information presentation unit displays the terminal-side version information and the vehicle-side version information that are stored in the storage unit on a web site.

According to this configuration, the vehicle-side software currently installed in the controller and the terminal-side software currently installed in the wireless communication terminal can be promptly notified to the service man via the web site.

In one embodiment of the present invention, a matching determination unit that determines whether the vehicle-side software installed in the controller and the terminal-side software installed in the wireless communication terminal match, based on the vehicle-side version information and the terminal-side version information that are stored in the storage unit, is further included. In addition, the information presentation unit presents the determination result by the matching determination unit.

According to this configuration, the matching determination unit automatically determines whether software needs to be updated. Therefore, compared to a case where the service man manually determines the matching, it is possible to suppress the erroneous determination of the necessity to update the software.

In one embodiment of the present invention, the terminal-side updating unit updates the terminal-side version information stored in the storage unit based on a data log indicating that the terminal-side software has been downloaded to the wireless communication terminal.

According to this configuration, the user does not have to bother using the wireless communication terminal to notify the terminal-side updating unit that the terminal-side software has been downloaded to the wireless communication terminal.

The above and/or other objects, features and effects of the present invention will be made clear by the description of the embodiment below with reference to the accompanying drawings.

### BRIEF DESCRIPTION OF DRAWINGS

FIG. 1 is a schematic diagram illustrating a configuration of a software management system including a software management device according to an embodiment of the present invention.
FIG. 2 is a block diagram illustrating an electrical configuration of the software management system.
FIG. 3 is a schematic diagram illustrating an image displayed when browsing a web site.
FIG. 4 is a schematic diagram illustrating a list of matching/unmatching between each version of the vehicle-side software illustrated in FIG. 3 and each version of the terminal-side software illustrated in FIG. 3.

### DESCRIPTION OF EMBODIMENTS

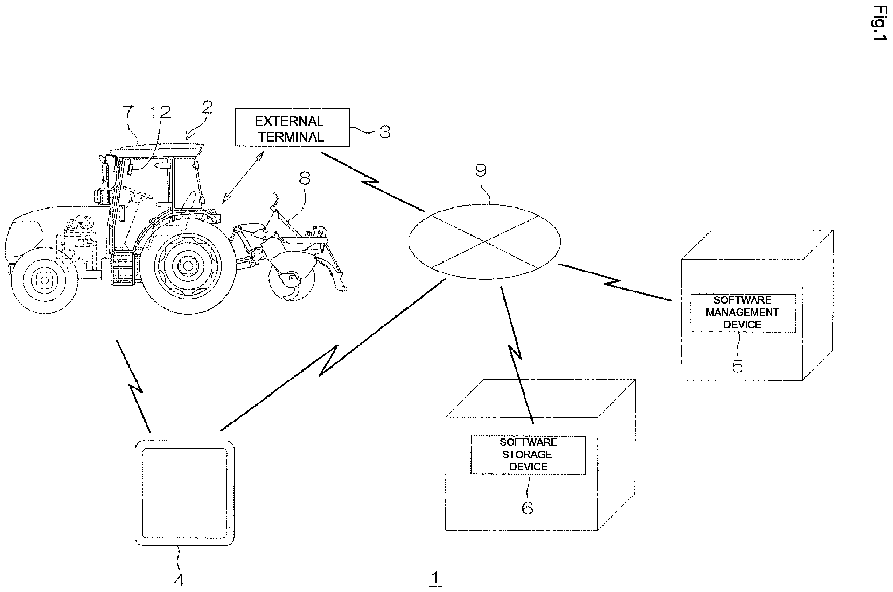

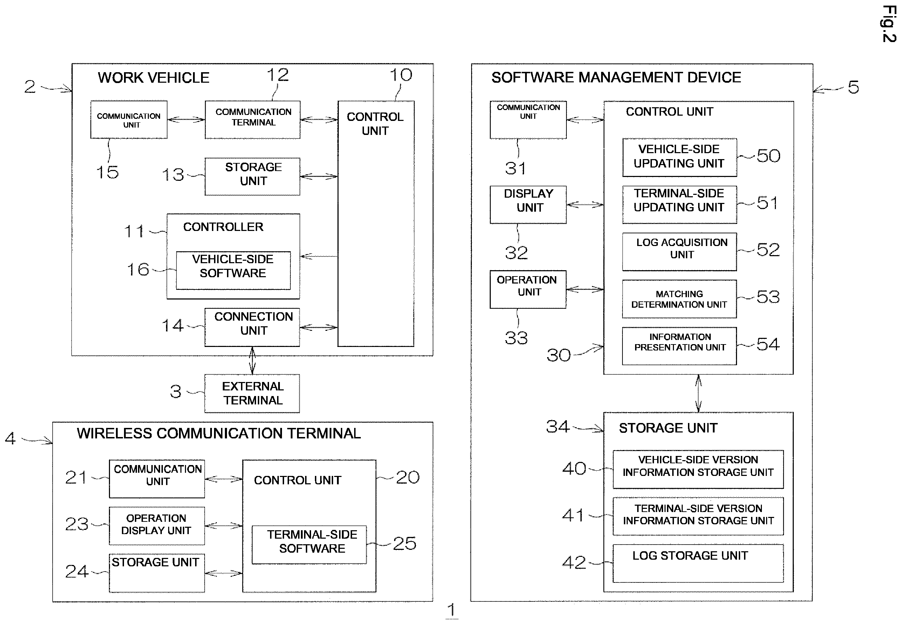

FIG. 1 is a schematic diagram illustrating a configuration of a software management system 1 including a software management device 5 according to an embodiment of the present invention. FIG. 2 is a block diagram illustrating an electrical configuration of the software management system.

The software management system 1 is a system that manages software installed in a work vehicle 2 and a wireless communication terminal 4 owned by a user. When the user owns a plurality of work vehicles 2 and wireless communication terminals 4 respectively, the software management system 1 manages the software installed in a plurality of work vehicles 2 and the software installed in a plurality of wireless communication terminals 4. However, in FIGs. 1 and 2, a description will be given focusing on one work vehicle 2 and one wireless communication terminal 4.

Referring to FIG. 1, the software management system 1 includes the work vehicle 2, an external terminal 3, the wireless communication terminal 4, a software management device 5, and a software storage device 6.

The work vehicle 2 includes a traveling machine body 7 capable of traveling in a field and a work machine 8 mounted on the traveling machine body 7. Examples of the work machine 8 include various work machines such as a roll baler, a tiller, a plough, a fertilizer applicator, a mower, and a seeder. In the present embodiment, an example in which a tiller is mounted on the traveling machine body 7 as the work machine 8 will be described.

Referring to FIG. 2, the work vehicle 2 includes a control unit 10 for controlling the movement of the traveling machine body 7 (forward, reverse, stop, turn, etc.) and the movement of the work machine 8 mounted on the traveling machine body 7 (elevation, drive, stop, etc.).

The control unit 10 can cause the work vehicle 2 to autonomously travel in the field by controlling the traveling mechanism of the work vehicle 2. Autonomous traveling means that the work vehicle 2 travels along a preset traveling route. The control unit 10 includes a microcomputer including a central processing unit (CPU) and a memory (read only memory, or ROM, random access memory, or RAM, etc.).

A plurality of controllers 11 for controlling each component of the work vehicle 2 are electrically connected to the control unit 10. The plurality of controllers 11 includes an engine controller that controls an engine speed, a vehicle speed controller that controls the vehicle speed of the traveling machine body 7, a steering controller that controls the orientation of the traveling machine body 7, and a lifting controller that controls the lifting of the work machine 8, a power take-off (PTO) shaft controller that controls the rotation of a PTO shaft that transmits power to the work machine 8, and the like. In each controller 11, vehicle-side software 16 for controlling these controllers 11 during autonomous traveling is installed. In each controller 11, different vehicle-side software 16 may be installed. Hereinafter, these controllers may be collectively referred to simply as a controller 11.

A communication terminal 12, a storage unit 13, and a connection unit 14 are electrically connected to the control unit 10. The communication terminal 12 is a mobile terminal for communicating between the wireless communication terminal 4 and the control unit 10. A communication unit 15 is electrically connected to the communication terminal 12. The communication unit 15 is an interface for wirelessly communicating between the wireless communication terminal 4 and the control unit 10.

The storage unit 13 includes a storage device such as a hard disk and a non-volatile memory. The connection unit 14 is a connector for electrically connecting the controller 11 and a device provided outside the work vehicle 2 via the control unit 10.

The external terminal 3 is a personal computer or the like, that is connected to the control unit 10 of the work vehicle 2 in order to update the vehicle-side software 16 installed in the controller 11. The external terminal 3 stores the vehicle-side software. A service man connects the external terminal 3 to the connection unit 14 of the work vehicle 2 and updates the vehicle-side software 16 of the controller 11. When the vehicle-side software 16 of the controller 11 is updated, a vehicle-side version update signal is transmitted from the external terminal 3 to the software management device 5 via a communication network 9 (see FIG. 1). The vehicle-side version update signal includes the version information of the vehicle-side software 16 of the controller 11 after the update.

The wireless communication terminal 4 includes a mobile terminal such as a smart phone and a tablet personal computer (tablet PC). The wireless communication terminal 4 wirelessly communicates with the work vehicle 2 via a Wi-Fi, and operates the work vehicle 2 in case of autonomous traveling.

The wireless communication terminal 4 includes a control unit 20. The control unit 20 includes a microcomputer including a CPU and memory (ROM, RAM, etc.). In the control unit 20, terminal-side software 25 needed to operate the work vehicle 2 during autonomous traveling is installed.

A communication unit 21, an operation display unit 23, a storage unit 24, and the like are electrically connected to the control unit 20. The communication unit 21 is an interface for communicating between the communication terminal 12 of the work vehicle 2 and the control unit 20 and for communicating between the software storage device 6 and the control unit 20, via the communication network 9 (see FIG. 1). The communication unit 21 may include a wireless local area network (LAN) router.

The operation display unit 23 includes, for example, a touch panel type display. The storage unit 24 includes a storage device such as a hard disk and a non-volatile memory.

The software storage device 6 (see FIG. 1) is a server for storing terminal-side software. The wireless communication terminal 4 can download the terminal-side software stored in the software storage device 6 to the control unit 20.

The software management device 5 manages the vehicle-side software 16 installed in the controller 11 of the work vehicle 2 and the terminal-side software 25 installed in the control unit 20 of the wireless communication terminal 4. The software management device 5 is provided in a remote monitoring center.

The software management device 5 includes a control unit 30. The control unit 30 includes a microcomputer including a CPU and a memory (ROM, RAM, etc.).

A communication unit 31, a display unit 32, an operation unit 33, a storage unit 34, and the like are electrically connected to the control unit 30. The communication unit 31 is a communication interface for the control unit 30 to communicate with the external terminal 3 and the software storage device 6 via the communication network 9 (see FIG. 1). The display unit 32 includes, for example, a display. The operation unit 33 includes, for example, a keyboard, a mouse, and the like. The storage unit 34 includes a storage device such as a hard disk and a non-volatile memory.

The storage unit 34 includes a vehicle-side version information storage unit 40, a terminal-side version information storage unit 41, and a log storage unit 42.

The vehicle-side version information storage unit 40 stores the version information of the vehicle-side software. The version information of the vehicle-side software is referred to as vehicle-side version information. The terminal-side version information storage unit 41 stores the version information of the terminal-side software information. The version information of the terminal-side software is referred to as terminal-side version information.

The control unit 30 includes a vehicle-side updating unit 50, a terminal-side updating unit 51, a log acquisition unit 52, a matching determination unit 53, and an information presentation unit 54.

The vehicle-side updating unit 50 changes, on the basis of that the vehicle-side software 16 installed in the controller 11 has been updated by the external terminal 3, the vehicle-side version information stored in the vehicle-side version information storage unit 40 to vehicle-side version information corresponding to the updated vehicle-side software 16.

Specifically, the service man updates the vehicle-side software 16 with the use of the external terminal 3, operates the external terminal 3, and transmits the vehicle-side version update signal to the software management device 5. When the control unit 30 receives the vehicle-side version update signal from the external terminal 3, the vehicle-side updating unit 50 changes the vehicle-side version information stored in the vehicle-side version information storage unit 40 to version information included in the vehicle-side version update signal.

The log acquisition unit 52 acquires a data log from the software storage device 6 at every predetermined time and stores same in the log storage unit 42. The data log is information indicating that the terminal-side software has been downloaded to the wireless communication terminal 4. The data log includes version information of the terminal-side software that the wireless communication terminal 4 has downloaded.

The terminal-side updating unit 51 changes, on the basis of the version information included in a latest data log acquired by the log acquisition unit 52, that is, on the basis of that the terminal-side software 25 has been downloaded to the wireless communication terminal 4, the terminal-side version information stored in the terminal-side version information storage unit 41 to terminal-side version information corresponding to the downloaded terminal-side software.

The matching determination unit 53 determines whether the vehicle-side software 16 currently installed in each controller 11 of the work vehicle 2 and the terminal-side software currently installed in the wireless communication terminal 4 match, on the basis of the vehicle-side version information and the terminal-side version information that are stored in the storage unit 34.

"Match" means that the vehicle-side software and the terminal-side software have compatibility in such a manner that the work vehicle 2 can normally and autonomously travel. "Do not match" means that the vehicle-side software and the terminal-side software do not have sufficient compatibility, and the work vehicle 2 may not be able to travel normally and autonomously.

The information presentation unit 54 displays (presents) the terminal-side version information stored in the terminal-side version information storage unit 41, the vehicle-side version information stored in the vehicle-side version information storage unit 40, and the determination result by the matching determination unit 53, on a web site that can be viewed by the service man. The web site is opened by the software management device 5, for example.

When the service man accesses the web site with the uses of the external terminal 3, the information presentation unit 54 displays a version presentation image on the display of the terminal. The version presentation image is an image presenting a list of versions of the vehicle-side software currently installed in the controller 11 of the work vehicle 2 owned by the user and versions of the terminal-side software currently installed in the wireless communication terminal 4 owned by the user.

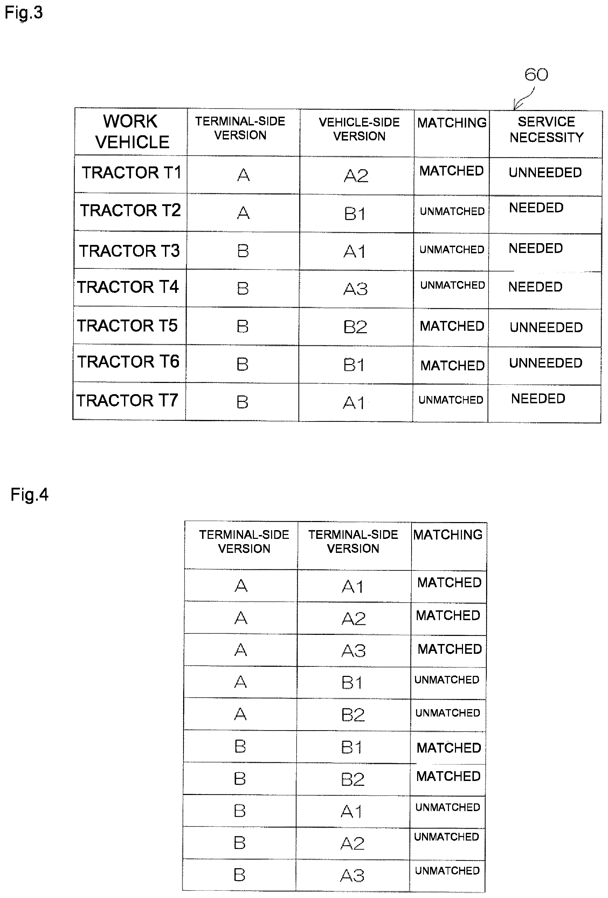

FIG. 3 is a schematic diagram illustrating a version presentation image 60 displayed when browsing a web site. In FIG. 3, a description will be given focusing on vehicle-side software installed in one controller 11 of the plurality of controllers 11 as the vehicle-side software.

The version presentation image 60 illustrated in FIG. 3 is a version presentation image relating to a user who owns seven tractors T1 to T7 as the work vehicle 2 and two wireless communication terminals 4. The version presentation image 60 illustrated in FIG. 3 lists versions A and B as the versions of the terminal-side software. The version presentation image 60 illustrated in FIG. 3 lists versions A1, A2, A3, B1, and B2 as the versions of the vehicle-side software. A common wireless communication terminal 4 is used for tractors T1 and T2. A common wireless communication terminal 4 is used for tractors T3 to T7.

In FIG. 3, the vehicle-side software installed in one controller 11 is focused and described, and therefore only one version is indicated in the "vehicle-side version" column of each tractor T1 to T7. However, in reality, the version presentation image 60 displays the vehicle-side software 16 installed in each controller 11 and the terminal-side software 25 installed in the control unit 20 of a corresponding wireless communication terminal 4.

FIG. 4 is a schematic diagram illustrating a list of matching/unmatching between each version A1 to A3, B1, and B2 of the vehicle-side software illustrated in FIG. 3 and each version A and B of the terminal-side software illustrated in FIG. 3.

As illustrated in FIG. 4, the terminal-side software of version A and the vehicle-side software of versions A1 to A3 match, and the terminal-side software of version B and the vehicle-side software of versions B1 and B2 match. Meanwhile, the terminal-side software of version A and the vehicle-side software of versions B1 and B2 do not match, and the terminal-side software of version B and the vehicle-side software of versions A1 to A3 do not match. In addition, version A is newer than version B in the terminal-side software, and versions A1 to A3 are newer than versions B1 and B2 in the vehicle-side software.

As illustrated in FIG. 3, the vehicle-side software of the tractors T1, T5 and T6 and the terminal-side software of the corresponding wireless communication terminal 4 match, and the vehicle-side software of the tractors T2, T3, T4 and T7 and the terminal-side software of the corresponding wireless communication terminal 4 do not match.

Therefore, "matched" is displayed in the "matching" column corresponding to the tractors T1, T5 and T6, and "unneeded" is displayed in the "service necessity" column corresponding to the tractors T1, T5 and T6. Meanwhile, "unmatched" is displayed in the "matching" column corresponding to the tractors T2, T3, T4 and T7, and "needed" is displayed in the "service necessity" column corresponding to the tractors T2, T3, T4, and T7.

The service man checks the service necessity by looking at the "service necessity" column and/or the "matching" column of the version presentation image 60. For example, the vehicle-side software of the tractor T2 is an old version B1 and the corresponding terminal-side software of the wireless communication terminal 4 is a new version A, and thus the service man changes the version of the vehicle-side software to one of new versions A1 to A3 with the use of the external terminal 3. In addition, the vehicle-side software of the tractor T4 is a new version A3 and the terminal-side software is an old version B, and thus the service man prompts the user to download terminal-side software of the new version A to the wireless communication terminal 4.

The version presentation image only needs to be provided with at least one of the "matching" column and the "service necessity" column, and it is not necessarily provided with both columns.

As described above, according to the present embodiment, when the vehicle-side software 16 installed in the controller 11 of the work vehicle 2 is updated by the external terminal 3, the vehicle-side version information stored in the vehicle-side version information storage unit 40 is updated. In addition, when the terminal-side software 25 is downloaded to the wireless communication terminal 4, the terminal-side version information stored in the terminal-side version information storage unit 41 is updated. Therefore, the information presentation unit 54 can present the vehicle-side version information of the vehicle-side software currently installed in the controller 11 and the terminal-side version information of the terminal-side software currently installed in the wireless communication terminal 4.

Therefore, on the basis of the version information presented by the information presentation unit 54, the service man can know whether the vehicle-side software currently installed in the controller 11 and the terminal-side software 25 currently installed in the control unit 20 of the wireless communication terminal 4 match. If they do not match, the service man can update the vehicle-side software 16 with the use of the external terminal 3, or the service man can prompt the user to update the terminal-side software 25.

As a result, it is possible to appropriately manage the terminal-side software 25 installed in the control unit 20 of the wireless communication terminal 4 and the vehicle-side software 16 installed in the controller 11 of the work vehicle 2.

In addition, according to the present embodiment, the information presentation unit 54 displays the vehicle-side version information stored in the vehicle-side version information storage unit 40 and the terminal-side version information stored in the terminal-side version information storage unit 41, on a web site.

According to this configuration, the vehicle-side software 16 currently installed in the controller 11 and the terminal-side software 25 currently installed in the corresponding wireless communication terminal 4 can be promptly notified to the service man via the web site.

In addition, in the present embodiment, the matching determination unit 53 determines whether the vehicle-side software 16 installed in the controller 11 and the terminal-side software 25 installed in the control unit 20 of the corresponding wireless communication terminal 4 match, on the basis of the vehicle-side version information and the terminal-side version information stored in the storage unit 34 of the software management device 5. Then, the information presentation unit 54 displays the determination result by the matching determination unit 53 on the web site.

Therefore, the matching determination unit automatically determines whether the vehicle-side software 16 and/or the terminal-side software 25 needs to be updated. Consequently, compared to a case where the service man manually determines the matching, it is possible to suppress erroneous determination of the necessity to update software.

Moreover, according to the present embodiment, the terminal-side updating unit 51 updates the terminal-side version information stored in the terminal-side version information storage unit 41, on the basis of a data log. Therefore, the user does not have to bother using the wireless communication terminal 4 to notify the terminal-side updating unit 51 that the terminal-side software 25 has been downloaded to the control unit 20 of the wireless communication terminal 4.

The present invention is not limited to the embodiment described above, and can be implemented in other forms.

For example, in the above-described embodiment, the information presentation unit 54 displays the terminal-side version information stored in the terminal-side version information storage unit 41, the vehicle-side version information stored in the vehicle-side version information storage unit 40, and the determination result by the matching determination unit 53, on a web site that can be viewed by the service man. However, unlike the above-described embodiment, the control unit 30 of the software management device 5 may not include the matching determination unit 53, and the information presentation unit 54 may display only the terminal-side version information stored in the terminal-side version information storage unit 41 and the vehicle-side version information stored in the vehicle-side version information storage unit 40, on the web site. In this case, the service man will determine the matching/unmatching.

Furthermore, in the above-described embodiment, the terminal-side updating unit 51 updates the terminal-side version information on the basis of the data log. However, unlike the above-described embodiment, the terminal-side updating unit 51 may update the terminal-side version information when the wireless communication terminal 4 transmits a terminal-side version update signal to the software management device 5. More specifically, when the terminal-side software is downloaded from the software storage device 6 to the wireless communication terminal 4, the terminal-side version update signal is transmitted from the software storage device 6 to the software management device 5 via the communication network 9 (see FIG. 1). The terminal-side version update signal includes the version information of the terminal-side software of the controller 11 after the update.

While the embodiment of the present invention have been described in detail, that is merely a specific example used for clarifying the technical content of the present invention, and the present invention should not be construed as limited to the specific example, but the scope of the invention is limited only by the appended claims.

This application corresponds to Japanese Patent Application No. 2018-59980 filed with the Japan Patent Office on March 27, 2018, and the entire disclosure of the application is incorporated herein by reference.

### DESCRIPTION OF REFERENCE NUMERALS

- 2:: work vehicle
- 3:: external terminal
- 4:: wireless communication terminal
- 5:: software management device
- 11:: controller
- 16:: vehicle-side software
- 25:: terminal-side software
- 34:: storage unit
- 50:: vehicle-side updating unit
- 51:: terminal-side updating unit
- 53:: matching determination unit
- 54:: information presentation unit

## Claims

1. A software management device that manages vehicle-side version information of vehicle-side software installed in a controller mounted on a work vehicle that can travel autonomously while working in a field, and terminal-side version information of terminal-side software installed in a wireless communication terminal that communicates with and operates the work vehicle, the software management device comprising:
a storage unit that stores the vehicle-side version information and the terminal-side version information;
a vehicle-side updating unit that changes, based on the vehicle-side software installed in the controller being updated by an external terminal connected to the controller, the vehicle-side version information stored in the storage unit to vehicle-side version information corresponding to the updated vehicle-side software;
a terminal-side updating unit that changes, based on the terminal-side software being downloaded to the wireless communication terminal, the terminal-side version information stored in the storage unit to terminal-side version information corresponding to the downloaded terminal-side software; and
an information presentation unit that presents the vehicle-side version information and the terminal-side version information stored in the storage unit.

2. The software management device according to claim 1, wherein the information presentation unit displays the terminal-side version information and the vehicle-side version information, that are stored in the storage unit, on a web site.

3. The software management device according to claim 1 or 2, further comprising a matching determination unit that determines whether the vehicle-side software installed in the controller and the terminal-side software installed in the wireless communication terminal match, based on the vehicle-side version information and the terminal-side version information that are stored in the storage unit,
wherein the information presentation unit presents a determination result by the matching determination unit.

4. The software management device according to any one of claims 1 to 3, wherein the terminal-side updating unit updates the terminal-side version information stored in the storage unit based on a data log indicating that the terminal-side software has been downloaded to the wireless communication terminal.
